# EUROPEAN PATENT SPECIFICATION

(11) **EP 2 658 725 B1**
(45) Date of publication and mention of the grant of the patent: **23.05.2018**
(21) Application number: 11811470.1
(22) Date of filing: 22.12.2011
(51) Int. Cl.: B44C 1/10, B44C 1/17

(54) **DECORATIVE ARTICLE**
ZIERGEGENSTAND
ARTICLE DÉCORATIF

(30) Priority: 28.12.2010 US 201061427627 P
(43) Date of publication of application: 06.11.2013
(73) Proprietor: 3M Innovative Properties Company, St. Paul, MN 55133-3427 (US)
(72) Inventor: SMITH, Douglas J., St. Paul, MN 55133-3427 (US); WILLIAMS, Jack J., III, St. Paul, MN 55133-3427 (US); ANDERSON, Gregory J., St. Paul, MN 55133-3427 (US); YOUNKER, Matthew J., St. Paul, MN 55133-3427 (US)
(74) Representative: Herzog, Fiesser & Partner Patentanwälte PartG mbB
(86) International application number: PCT/US2011/066827
(87) International publication number: WO 2012/092126

(56) References cited:
- WO-A1-00/61364
- US-A- 4 678 690
- US-A- 4 801 479

## Description

### TECHNICAL FIELD

The present disclosure broadly relates to decorative film laminates.

### BACKGROUND

Original equipment manufacturers (OEMs) of vehicles such as automobiles, as well as other vehicles (e.g., aircraft, watercraft, and other land based vehicles), have used conformable paint replacement films to cover parts of the vehicle body (e.g., to trim out the body areas around side glass, also known as a Daylight Opening or DLO). These paint replacement films are often colored black to provide a black accent color on those surfaces. The films are typically polyvinyl chloride (PVC) or polyethylene/polypropylene (PE/PP) films with a pressure-sensitive adhesive layer that has air bleed capability to facilitate application. The films are offered in various finishes, ranging from a 5 percent gloss textured finish to 30 percent mid-gloss smooth finish to a 90 percent high gloss smooth finish to accommodate OEM design requirements for particular vehicle models/platforms. Textured or mid-gloss finishes are typically preferred in vehicle assembly plants for ease of application because they tend to hide surface defects such as dust or roughness. However, OEM specifications often require a high gloss finish, particularly on premium class vehicles, because it enhances the appearance and provides a higher value perception to the consumer.

One problem that OEMs face in using high gloss films is that roughness in the original body paint surface, referred to generically as "orange peel", often is apparent through the paint replacement films, especially through the black colored paint replacement films, which yields an unacceptable (non-smooth) surface appearance. Improving the body paint application to reduce orange peel is difficult and adds complexity to the paint shop operation. Finishing techniques can be laborious and the associated dust is not well-suited to a clean-room painting environment.

Some OEMs have resorted to using relatively thick applique parts made of hard plastic or metal, which can be applied over the original body paint and attached either mechanically or with pressure-sensitive foam tape to hide the orange peel. Appliques are more expensive than paint replacement films, more difficult to design for fit and finish on the sheet metal components, more troublesome because gaps in the fit to the vehicle body can cause wind noise and rattling at highway speeds, and more difficult to install in the assembly plant and repair in the field.

U.S. Patent No. 4,801,479 (Fielder et al.) discloses a decorative article made by a process in which a substrate having an effective edge in a closed pattern receives a fluent plastic composition cast into an area defined by the edge. According to this process, the composition is then cured to form a clear plastic lens cap that enhances the appearance of the substrate.

### SUMMARY

In accordance with one aspect of the present invention, a decorative article is provided that comprises a first member and a second member. The first member has an outer surface and a peripheral edge, and comprises a conformable opaque color film backed by a first pressure-sensitive adhesive layer. The second member comprises a semi-rigid sheet backed by a second pressure-sensitive adhesive layer. The semi-rigid sheet has a first edge opposite a second edge and a major surface contacting the first pressure-sensitive adhesive layer. The first member extends beyond the first edge and the second edge, and at least one of the first edge and second edge of the semi-rigid sheet is a rounded edge.

In another aspect of the present invention, a combination is provided that comprises a decorative article according to the present invention and a substrate having a substrate surface. The substrate surface has undesirable surface defects, the second pressure-sensitive adhesive layer is adhered to (e.g., adheres the semi-rigid sheet to) the substrate surface, and the semi-rigid sheet is thick enough and rigid or stiff enough to prevent the undesirable surface defects from substantially reading-through to the outer surface of the first member. The undesirable surface defects substantially read through to the outer surface of the first member, when such defects are sufficiently visible with a normal unaided human eye as to be unacceptable. Preferably, the undesirable surface defects cannot be seen on the outer surface of the first member with a normal unaided human eye. The undesirable surface defects can include, but not limited to, surface roughness (e.g., "orange peel"), texture, perforations (e.g., holes through a sheet metal surface), indentations, dirt, other contamination and any combination of such surface defects.

In an additional aspect of the present invention, a method is provided that comprises applying a decorative article according to the present invention so as to cover undesirable surface defects on a surface of a substrate without the surface defects substantially reading-through to the outer surface of the first member. Preferably, the undesirable surface defects cannot be seen on the outer surface of the first member with a normal unaided human eye.
Further aspects of the invention are set out in the corresponding dependent claims.

Advantageously, by including the second member, decorative articles according to the present disclosure exhibit reduced orange peel transmitted through the decorative article when applied over painted or primed metal having an orange peel texture as compared to decorative articles that lack the second member. Also advantageously, decorative articles of the present disclosure can cover dirt and contamination, or defects in the sheet metal surface, which improves the ease of application of the articles as compared to decorative articles that lack the second member. This is especially useful in the case of high gloss decorative articles where read-through of surface texture or dirt/contamination is readily apparent.

### BRIEF DESCRIPTION OF THE DRAWINGS

Advantages and features of the invention may be more completely understood by consideration of the following figures in connection with the detailed description provided below. The figures are illustrative drawings of various articles and are not necessarily drawn to scale.
Fig. 1 is a schematic cross-sectional side view along line 1 in Fig. of exemplary decorative article 100;
Fig. 2 is an enlarged schematic cross-sectional side view of one lateral edge of an alternative exemplary decorative article 200;
Fig. 3 is a schematic perspective view of decorative article 100; and
Fig. 4 is an enlarged schematic cross-sectional side view of the decorative article lateral edge of Fig. 2 applied to a substrate.

### DETAILED DESCRIPTION

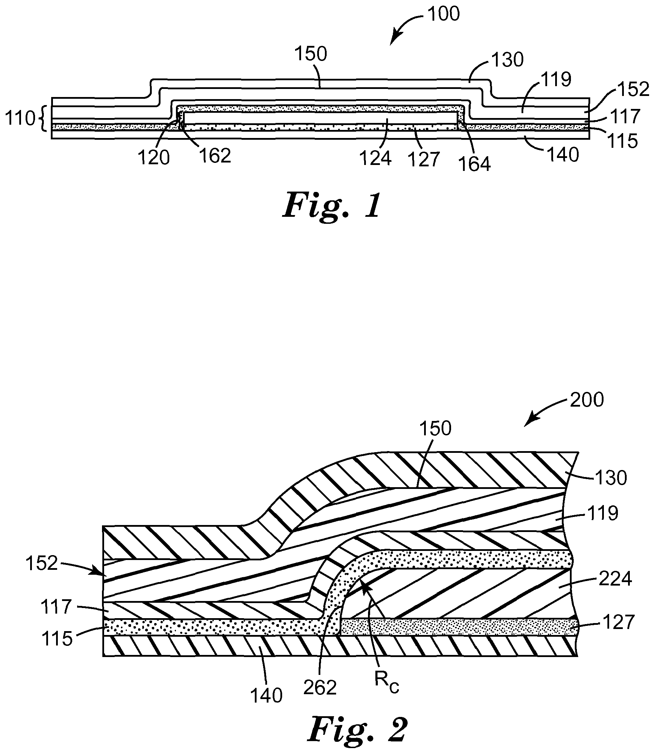

Referring now to Fig. 1, decorative article 100 comprises first member 110 and second member 120. First member 110 has outer surface 150 and peripheral edge 152, and comprises conformable opaque color film 117 and first pressure-sensitive adhesive layer 115 disposed on and substantially coextensive with conformable opaque color film 117. Optional transparent protective layer 119 is disposed on conformable opaque color film 117, opposite first pressure-sensitive adhesive layer 115, and extends to peripheral edge 152.

Second member 120 comprises semi-rigid sheet or smoothing layer 124 having a first straight cut lateral edge 162 opposite a second straight cut lateral edge 164 and contacting first pressure-sensitive adhesive layer 115. Second pressure-sensitive adhesive layer 127 is disposed on, and substantially coextensive with, semi-rigid sheet 124. First member 110 extends beyond first edge 162 and second edge 164. Decorative article 100 may further comprise at least one of optional premask 130 and optional release liner 140.

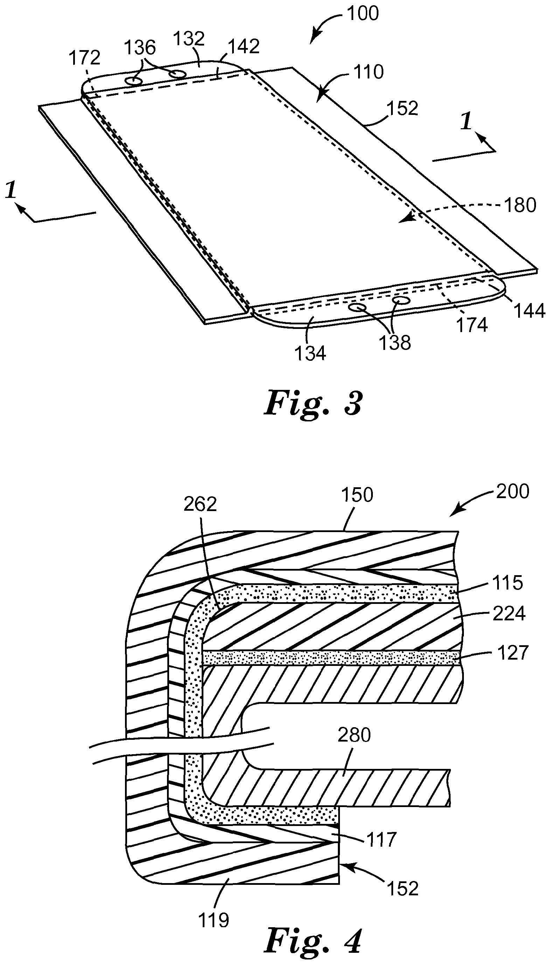

Referring now to Figs. 2 and 4, an alternative decorative article embodiment 200 comprises a first member that has outer surface 150 and peripheral edge 152, and comprises conformable opaque color film 117 and first pressure-sensitive adhesive layer 115 disposed on and substantially coextensive with conformable opaque color film 117. Optional transparent protective layer 119 is disposed on conformable opaque color film 117, opposite first pressure-sensitive adhesive layer 115, and extends to peripheral edge 152. The article 200 also comprises a second member that comprises semi-rigid sheet or smoothing layer 224 that has a first lateral edge 262 opposite a second lateral edge (not shown). Sheet 224 contacts first pressure-sensitive adhesive layer 115. Second pressure-sensitive adhesive layer 127 is disposed on, and substantially coextensive with, semi-rigid sheet 224. The first member extends beyond the first edge 262 and second edge (not shown). Decorative article 200 may further comprise at least one of optional premask 130 and optional release liner 140. Adhesive layers 115 and 127 are used to adhere article 200 to the surface of a substrate 280 (e.g., a flange portion of the b-pillar of a motor vehicle sheet metal body).

The conformable opaque color film is first of all opaque and conformable (i.e., conforms to the surface of a substrate during application of the decorative article to the substrate. By the term "opaque", it is meant that an ordinary observer would be unable to see surface coloration of the substrate and the semi-rigid sheet through the conformable opaque color film. Some conformable opaque color films comprise a conformable polymer film containing sufficient colorant (e.g., pigment and/or dye) to render it opaque. Any color of colorant (e.g., white, black red, blue, yellow, silver, or gold) may be used. If intended for use as a paint replacement film, the color of the decorative article is typically black. Examples of suitable polymers for use in the polymer film include plasticized polyvinyl chloride (PVC), thermoplastic polyolefins (e.g., polypropylene and polyethylene), ionomers, ethylene copolymers (e.g., ethylene-acrylic acid copolymers, ethylene-ethyl acrylate copolymers, and ethylene-vinyl acetate copolymer), acrylate-urethane interpenetrating polymer networks and combinations thereof. Other useful conformable opaque color films include polymer films having an opaque coating (e.g., a paint) thereon.

The conformable opaque color film is used in combination with first pressure-sensitive adhesive (PSA) layer 115. Any pressure-sensitive adhesive may be used. Exemplary PSAs include acrylic PSAs. The pressure-sensitive adhesive may be smooth or textured. In some embodiments, the pressure-sensitive adhesive has air bleed capability to prevent trapped air bubbles during application of the decorative article to the substrate; for example, as a result of a microstructured surface (e.g., channels, ridges, cylindrical prisms, and/or pyramids) formed in the PSA layer; for example as described in U.S. Pat. No. 6,524,675 (Mikami et al.) and U.S. Pat. Appln. Publ. No. 2008/0105356 A1 (Fleming et al.). The thickness of the first pressure-sensitive adhesive layer is typically dependent upon several factors including, for example, the adhesive composition, the type of structures used to form the microstructured surface, the type of substrate, and the thickness of the decorative article. Those skilled in the art are capable of adjusting the thickness to address specific application factors. In general, the thickness of the adhesive layer is generally greater than the height of the structures which comprise the microstructured surface. Typically, the thickness of the adhesive layer is within a range from about 10 to about 50 micrometers, although other thicknesses may be used.

The optional protective transparent layer (e.g., a topcoat) typically comprises a polymeric film (e.g., an aliphatic polyurethane or fluoropolymer) that imparts a degree of abrasion resistance, weathering resistance, and/or stain resistance, although its role may be aesthetic (e.g., to provide a "wet" look).

The combination of the conformable opaque color film, PSA layer, and optional protective transparent layer e.g., as in the first member), are commonly included in decorative films that are also known in the art as paint replacement films. Details concerning such films may be found in, for example, U.S. Publ. Pat. Appl. Nos. 2007/0047099 A1 (Clemens et al.) and 2008/0199683A1 (Egashira et al.) and in U.S. Pat. Nos. 5,034,275 (Pearson et al.); 5,114,789 (Reafler); 5,242,751 (Hartman); 5,268,215 (Krenceski et al.); 5,468,532 (Ho et al.); 5,965,256 (Barrera); 6,399,193 (Ellison); 6,475,616 (Dietz et al.); 7,141,294 (Sakurai et al.); and 7,141,303 (Clemens et al.).

Suitable PSA backed conformable opaque color films are known in the art, and some are commercially available. Examples include those available from 3M Company of Saint Paul, MN as 3M PAINT REPLACEMENT FILM WITH COMPLY ADHESIVE PERFORMANCE (e.g., marketed in grades F577, FCW2143J, FCW3143J, FPA2300J, FPA9300J, FPW2001J/S, FPW9000J, FRA0045J, FTA9055J, FTW9953J, FUS1007, and PB2156). COMPLY ADHESIVE refers to pressure-sensitive adhesives marketed by 3M Company and having microreplicated channels to facilitate air bleed during application to a substrate.

Optionally, a premask (i.e., a releasably adhered protective film or sheet) may be present on the outer surface (e.g., non-PSA coated surface) of the first member. Useful premasks include polymer films and treated paper. Premasks are disposable and are normally discarded during or after application of the decorative article to a substrate.

Decorative articles according to the present disclosure may have any gloss (e.g., low gloss, medium gloss, or high gloss) although the advantages of the present disclosure will typically be most evident in the instance of high gloss decorative articles. In some embodiments, the decorative article may have a 20 degree gloss of at least 30, 40, 50, or even at least 60 gloss units.

The semi-rigid sheet or smoothing layer is semi-rigid, that is it should have sufficient flexibility to conform under pressure to a three-dimensional substrate (e.g., an automotive pillar), yet should be of sufficient rigidity that it substantially inhibits transmission of imperfections on the surface of the substrate to the surface of the first member such as, for example, orange peel texture on the substrate surface, holes formed into or through the substrate, sheet metal defects, imperfections, etc., or combinations thereof. For example, in some embodiments, the semi-rigid sheet may not be flexible enough to be wrapped 180 degrees at a radius of about 3 millimeters without damage. As used herein, the term "sheet" refers to a thin piece of material having width and length that are substantially larger than the thickness of the piece of material. It is desirable for the major surface of the semi-rigid or smoothing sheet to have a maximum long wave smoothness (measured using a Wave-Scan DOI measuring device obtained from BYK Gardner, catalog number 4816) of up to about 20, 19, 18, 17, 16, 15, 14, 13, 12, 11, 10, 9, 8, 7, 6, 5, 4, 3, 2, or 1, depending on the aesthetic requirements of the particular application.

The semi-rigid sheet may be made of any material having the aforementioned properties in sheet form. Preferably, the material used for the semi-rigid sheet is chosen so as to exhibit a coefficient of thermal expansion that is the same or at least comparable to that of the material used to make the underlying substrate. Desirable semi-rigid sheets according to the present invention can have a thickness in the range of from about 50 micrometers up to and including about 1000 micrometers or more, up to and including about 1500 micrometers or more, or up to and including about 2000 micrometers or more.

Examples of materials that can be used to make semi-rigid sheets include papers and polymeric (e.g., plastic) films. Exemplary semi-rigid sheets can have a thickness in the range of from about 0.002 to 0.005 inch (0.05 to 0.12 mm). Exemplary semi-rigid sheets can be made of biaxially oriented, polyethylene terephthalate (PET), polymethyl methacrylate, polycarbonate, and cellulose acetate sheets. Exemplary semi-rigid sheets can also comprise acrylonitrile-butadiene styrene (ABS) or polycarbonate-acrylonitrile-butadiene styrene (PC-ABS). The above noted sheet materials and thicknesses are not intended to exclude other materials and thicknesses that also are functional for this intended use. In addition to a semi-rigid sheet, the second member can also include an additional layer having a very smooth top surface attached to the top surface of the semi-rigid sheet to insure that no undesirable surface texture on the semi-rigid sheet reads through to the show surface of the first member. Such a very smooth layer can be particularly useful, when the first member has a high gloss finish.

The second pressure-sensitive adhesive layer 127 is disposed (e.g., coated) on the semi-rigid sheet. The second pressure-sensitive adhesive layer is substantially coextensive with the semi-rigid sheet, although minor differences can be tolerated under many circumstances. Any pressure-sensitive adhesive may be used. For example, the second PSA layer and the first PSA layer may comprise the same or different adhesive. Exemplary second pressure-sensitive adhesives include acrylic PSAs such as, for example, those marketed by 3M Company. As with first pressure-sensitive adhesive layer 115, the second pressure-sensitive adhesive may be smooth or textured. In some embodiments, the second pressure-sensitive adhesive has air bleed capability to prevent trapped air bubbles during application of the decorative article to the substrate; for example, as a result of a microstructured surface. Typically, the thickness of the second PSA layer is within a range from about 10 to about 50 micrometers, although other thicknesses may be used.

Optionally, a release liner may be releasably adhered to either or both of the first and second pressure-sensitive adhesive layers. Examples include silicone-treated papers and silicone-treated polyester films. Release liners are readily available from commercial sources.

Typically, edges of the first and second members are essentially perpendicular to their respective major surfaces; for example, as formed by standard die cutting or knife cutting. However, in some embodiments, peripheral edges of the first and/or second members may be feathered (that is, angled) or rounded; for example, to better hide the edges and provide a smoother visual transition.

When the decorative article 100 is applied to the surface of a substrate, one or both portions of the first member 110 extending beyond the semi-rigid sheet 124 conform to the surface of the substrate. Depending on the configuration (i.e., shape and dimensions) of the underlying substrate, one or both of the straight cut lateral edges 162 and 164 of sheet 124 can telegraph through to be seen as a straight edge or crease on the surface of the decorative article 100 (as shown in Fig. 1). To help eliminate such unsightly telegraphing of the edges 162 and 164, decorative article 200 is provided with at least the first lateral edge 262 of its semi-rigid sheet 224 being rounded so as to cause a relatively gradual change in the slope of the first member as it extends beyond the sheet 224 (see Fig. 4). It can be desirable for both opposite lateral edges of the sheet 224 to be so rounded. In one embodiment of the sheet 224, one or both lateral edges of the sheet 224 are formed to exhibit a radius of curvature R_{c} (see Fig. 2). The radius R_{c} can be equal to at least about half the thickness of sheet 224, about the thickness of sheet 224, or even larger than the thickness of sheet 224.

Referring to Fig. 3, the second member 120 of decorative article 100 can optionally comprise opposed alignment tabs 132, 134 at corresponding ends of main portion 180 of second member 120. If present, alignment tabs 132, 134 optionally have respective locating holes 136, 138 and may be detachable (for example, by tearing or bending) along respective optional lines of weakness (e.g., perforations 142, 144). In the embodiment shown in Fig. 3, if optional alignment tabs 132, 134 are present, the remaining portion 180 of second member 120 is disposed within peripheral edge 152.

If optional alignment tabs 132, 134 are not present, second member 120 has third end edge 172 opposite fourth end edge 174. End edges 172 and 174 are each superposed on a corresponding length of peripheral edge 152 of first member 110. In another embodiment, if tabs 132, 134 are not present, first member 110 can optionally include one or two end portions (not shown) of peripheral edge 152 that are as wide as corresponding end edges 172 and 174 and that extend beyond and wrap around and under a portion of edge 172 and/or edge 174 of second member 120, respectively. In this way, one or both end edges 172 and 174 can be hidden to provide a more finished end edge appearance for decorative article 100, depending on customer preference.

In one exemplary embodiment, the decorative article is a unitary film that consists of a PET film die-cut to the shape of a painted surface of vehicle body, over-laminated with a high gloss first member (e.g., a high gloss 3M PAINT REPLACEMENT FILM as discussed above) that is indexed and die-cut according to the shape of a vehicle body part, but designed with locating holes to allow positioning of the PET film on the vehicle body part, and with first member extensions that can be wrapped around the backside of the vehicle body part to finish the edges and provide a smooth, even transition. Typically, the second member is positioned such that it is within 1 mm of the vehicle body show surface edge, which prevents the edge of the second member from being visually noticeable under the high gloss decorative article, although other configurations are possible, depending on design requirements.

Decorative articles according to the present disclosure may be applied to a substrate by simple hand pressure, typically with the aid of a squeegee (e.g., made of polyethylene, rubber, or felt).

Exemplary substrates include painted or unpainted metal and painted or unpainted molded polymers. More specifically, decorative articles according to the present disclosure may be applied to painted vehicle body parts such as automotive pillars (a, b, c, and d pillars) and vehicle trim (e.g., bumpers, mirror mounts, and spoilers).

Decorative articles according to the present disclosure may be made by various techniques including coating and/or lamination of the various layers, films, and members. In one exemplary method, a 5- mil (125 micron) thick polyethylene terephthalate film is rotary kiss-cut with a one-mil textured pressure-sensitive adhesive on a release liner to the shape of a desired substrate surface, over-laminating with a the 3M FTW9053J film (a black PVC film with polyurethane clear coat and acrylic PSA, and index kiss cutting the laminated article to the final part shape with 2 sets of locating holes (top and bottom of the part) located on tearable tabs.

Objects and advantages of this disclosure are further illustrated by the following nonlimiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight.

### EXAMPLE 1

A decorative film laminate similar to that shown in Figure 1 was prepared by laminating a 15 cm by 5 cm piece of black colored paint replacement film having a high gloss surface finish (available as FTW9053J from 3M Company of St. Paul, MN) to a 14 cm by 5 cm pressure-sensitive adhesive-coated 50 micrometer (0.002 in) thick biaxially oriented polyester (PET) film . The FTW9053J film had a 5 mm extension on both sides of the PET film. The FTW9053J paint replacement film consisted of an opaque high gloss carbon black filled polyvinyl chloride film (100 micron) having a clear polyurethane-based topcoat (20 micron) on one side and an acrylate-based pressure-sensitive adhesive (35 micron) on the opposite side. The pressure-sensitive adhesive layer was textured with a microstructure so as to provide an air-bleed capability. An acrylate-based pressure-sensitive adhesive 35 micron was applied to one side of the PET film using a transfer tape. The pressure-sensitive adhesive layer was textured with a microstructure so as to provide an air-bleed capability. The FTW9053J paint replacement film was laminated by hand to the non-adhesive side of the PET film to provide a decorative film laminate.

The film laminate was laminated to a painted steel panel having a high degree of an orange peel appearance as shown in Table 1. The ability of the PET film to reduce the level of orange peel transmitted from the painted panel through the laminate to the visible side of the FTW9053J paint replacement film is reported in Table 1 below. The roughness (Long Wave - LW) of the visible surface of the FTW9053J paint replacement film was measured using a Wave-Scan DOI measuring device obtained from BYK Gardner (catalog number 4816). The data was filtered into two structure size ranges, Longwave LW (structures from 0.2-1.2 mm) and Shortwave SW (structures from 1.2-12 mm). The measurement range goes from 0 (smooth) to 100 (highly structured). Thus, lower units indicate smoother surfaces. The films were laminated to the painted panel, and then heated at 150 °F (65.6 °C) for 20 minutes before measuring orange peel with the Wave-Scan DOI measuring device. A control sample was measured using FTW9053J paint replacement film laminated directly to the painted steel panel without the use of PET film.

### EXAMPLE 2

A decorative film laminate was prepared as in Example 1 above, except that a 125 micrometer (0.005 in) thick PET film was used to laminate to the FTW9053J paint replacement film. The level of orange peel transmitted from the painted panel through the laminate to the visible side of the FTW9053J paint replacement film is reported in Table 1 below.

**TABLE 1**

| SPECIMEN | LONGWAVE UNITS |
|---|---|
| Painted Panel | 28.6 |
| Control (FTW9053J only, no PET) | 27 |
| Example 1 (50-micrometer PET) | 20.7 |
| Example 2 (125-micrometer PET) | 17.9 |

### ALTERNATIVE NON- CLAIMED EXAMPLES

### Decorative Article

1. A decorative article comprising:
   a first member having an outer surface and a peripheral edge, said first member comprising a conformable opaque color film backed by a first pressure-sensitive adhesive layer; and
   a second member comprising a semi-rigid sheet backed by a second pressure-sensitive adhesive layer, with said semi-rigid sheet having a first edge opposite a second edge and a major surface contacting said first pressure-sensitive adhesive layer,
   wherein said first member extends beyond said first edge and said second edge, and at least one of said first edge and second edge of said semi-rigid sheet is a rounded edge.
2. The decorative article of example 1, wherein at least one of said first edge and second edge of said semi-rigid sheet is rounded so as to cause a relatively gradual change in the slope of said first member as it extends beyond said semi-rigid sheet.
3. The decorative article of examples 1 or 2, wherein at least one of said first edge and second edge of said semi-rigid sheet is a rounded edge with a radius of curvature equal to at least about half the thickness of said semi-rigid sheet.
4. The decorative article of any one of examples 1 to 3, wherein said first edge and said second edge are each a rounded edge.
5. The decorative article of any one of examples 1 to 4, wherein said second member has a third edge opposite a fourth edge, and wherein said third edge and said fourth edge are superposed on said peripheral edge.
6. The decorative article of any one of examples 1 to 5, wherein said second member is disposed within said peripheral edge.
7. The decorative article of any one of examples 1 to 6, wherein said decorative article comprises a main portion and opposed alignment tabs adjacent said main portion, wherein said alignment tabs are detachable along respective lines of weakness.
8. The decorative article of any one of examples 1 to 7, wherein said first member further comprises a transparent protective layer disposed on said conformable opaque color film and extending to said peripheral edge.
9. The decorative article of any one of examples 1 to 8, wherein the outer surface of said first member has a 20 degree gloss of at least 40 gloss units.
10. The decorative article of any one of examples 1 to 9, further comprising a premask releasably adhered to the outer surface of said first member.
11. The decorative article of any one of examples 1 to 10, wherein said decorative article is adapted to be adhered to a painted surface of a motor vehicle body.
12. The decorative article of any one of examples 1 to 10, wherein said decorative article is adapted to be adhered to an automotive b-pillar of a motor vehicle body.
13. The decorative article of any one of examples 1 to 12, wherein said semi-rigid sheet comprises a polyester sheet.
14. The decorative article of any one of examples 1 to 13, wherein said semi-rigid sheet comprises an acrylonitrile-butadiene-styrene (ABS), polycarbonate-acrylonitrile-butadiene-styrene (PC-ABS) sheet, or biaxially oriented polyethylene terephthalate (PET).
15. The decorative article of any one of examples 1 to 14, wherein the major surface of said semi-rigid sheet has a maximum long wave smoothness of up to about 20.
16. The decorative article of any one of examples 1 to 15, wherein said first member and said second member are biaxially coextensive.

### Combination

17. A combination of the decorative article of any one of examples 1 to 16 with a substrate having a substrate surface, wherein said substrate surface has undesirable surface defects, said second pressure-sensitive adhesive layer is adhered to said substrate surface, and said semi-rigid sheet is thick enough and rigid enough to prevent said undesirable surface defects from substantially reading-through to the outer surface of said first member.
18. The combination of example 17, wherein said semi-rigid sheet is a polymeric sheet having a thickness in the range of from about 50 micrometers up to and including about 2000 micrometers.
19. The combination of examples 17 or 18, wherein said substrate is part of a vehicle body.

### Method

20. A method comprising applying the decorative article of any one of examples 1 to 16 so as to cover undesirable surface defects on a surface of a substrate without the surface defects substantially reading-through to the outer surface of the first member.
21. The method of example 20, wherein the substrate comprises at least a portion of a vehicle body.
22. The method of example 21, wherein the substrate comprises an automotive b-pillar.

## Claims

1. A decorative article (100, 200) with a first member (110) having an outer surface (150) and a peripheral edge (152), wherein
said first member (110)comprises a conformable opaque color film (117) backed by a first pressure-sensitive adhesive layer (115); and wherein the decorative article (100, 200) further comprises
a second member (120) comprising a semi-rigid sheet (124, 224) backed by a second pressure-sensitive adhesive layer (127), with said semi-rigid sheet (124, 224) having a first edge opposite a second edge and a major surface contacting said first pressure-sensitive adhesive layer (115),
wherein said first member (110) extends beyond said first edge and said second edge, and at least one of said first edge and second edge of said semi-rigid sheet (124, 224) is a rounded edge.

2. The decorative article (100, 200) of claim 1, wherein at least one of said first edge and second edge of said semi-rigid sheet (124, 224) is rounded so as to cause a relatively gradual change in the slope of said first member (110) as it extends beyond said semi-rigid sheet (124, 224).

3. The decorative article (100, 200) of claim 1 or 2, wherein at least one of said first edge and second edge of said semi-rigid sheet (124, 224) is a rounded edge with a radius of curvature equal to at least half the thickness of said semi-rigid sheet (124, 224).

4. The decorative article (100, 200) of any one of claims 1 to 3, wherein said first edge and said second edge are each a rounded edge.

5. The decorative article (100, 200) of any one of claims 1 to 4, wherein said second member (120) has a third edge opposite a fourth edge, and wherein said third edge and said fourth edge are superposed on said peripheral edge.

6. The decorative article (100, 200) of any one of claims 1 to 5, wherein said second member (120) is disposed within said peripheral edge (152).

7. The decorative article (100, 200) of any one of claims 1 to 6, wherein said decorative article (100, 200) comprises a main portion (180) and opposed alignment tabs (132, 134) adjacent said main portion, wherein said alignment tabs (132, 134) are detachable along respective lines of weakness (142, 144).

8. The decorative article (100, 200) of any one of claims 1 to 7, wherein said decorative article (100, 200) is adapted to be adhered to a painted surface of a motor vehicle body.

9. The decorative article (100, 200) of any one of claims 1 to 8, wherein the major surface of said semi-rigid sheet (124, 224) has a maximum long wave smoothness of up to 20.

10. The decorative article (100, 200) of any one of claims 1 to 9, wherein said first member (110) and said second member (120) are biaxially coextensive.

11. A combination of the decorative article (100, 200) of any one of claims 1 to 10 with a substrate (280) having a substrate surface, wherein said substrate surface has undesirable surface defects, said second pressure-sensitive adhesive layer (127) is adhered to said substrate surface, and said semi-rigid sheet (124, 224) is thick enough and rigid enough to prevent said undesirable surface defects from substantially reading-through to the outer surface of said first member (110).

12. The combination of claim 11, wherein said semi-rigid sheet (124, 224) is a polymeric sheet having a thickness in the range of from 50 micrometers up to and including 2000 micrometers.

13. The combination of claim 11 or 12, wherein said substrate is part of a vehicle body.

14. A method comprising applying the decorative article (100, 200) of any one of claims 1 to 10 so as to cover undesirable surface defects on a surface of a substrate (280) without the surface defects substantially reading-through to the outer surface of the first member (110).

15. The method of claim 14, wherein the substrate (280) comprises at least a portion of a vehicle body.

## Patentansprüche

1. Dekorationsartikel (100, 200) mit einem ersten Element (110), das eine Außenoberfläche (150) und einen Umfangsrand (152) aufweist, wobei
das erste Element (110) eine anpassbare undurchsichtige Farbfolie (117) umfasst, die von einer ersten Haftkleberschicht (115) getragen wird; und wobei der Dekorationsartikel (100, 200) ferner Folgendes umfasst
ein zweites Element (120), das eine halbsteife Lage (124, 224) umfasst, die von einer zweiten Haftkleberschicht (127) getragen wird, wobei die halbsteife Lage (124, 224) einen ersten Rand gegenüber einem zweiten Rand aufweist, und eine Hauptoberfläche in Kontakt mit der ersten Haftkleberschicht (115) ist,
wobei das erste Element (110) über den ersten Rand und den zweiten Rand hinaus verläuft und mindestens einer von dem ersten Rand und dem zweiten Rand der halbsteifen Lage (124, 224) ein abgerundeter Rand ist.

2. Dekorationsartikel (100, 200) nach Anspruch 1, wobei mindestens einer von dem ersten Rand und dem zweiten Rand der halbsteifen Lage (124, 224) abgerundet ist, um eine relativ allmähliche Änderung in der Steigung des ersten Elements (110) beim Verlauf über die halbsteife Lage (124, 224) hinaus zu bewirken.

3. Dekorationsartikel (100, 200) nach Anspruch 1 oder 2, wobei mindestens einer von dem ersten Rand und dem zweiten Rand der halbsteifen Lage (124, 224) ein abgerundeter Rand mit einem Krümmungsradius von gleich mindestens der Hälfte der Dicke der halbsteifen Lage (124, 224) ist.

4. Dekorationsartikel (100, 200) nach einem der Ansprüche 1 bis 3, wobei der erste Rand und der zweite Rand jeweils ein abgerundeter Rand sind.

5. Dekorationsartikel (100, 200) nach einem der Ansprüche 1 bis 4, wobei das zweite Element (120) einen dritten Rand gegenüber einem vierten Rand aufweist und wobei der dritte Rand und der vierte Rand über dem Umfangsrand angeordnet sind.

6. Dekorationsartikel (100, 200) nach einem der Ansprüche 1 bis 5, wobei das zweite Element (120) innerhalb des Umfangsrands (152) angeordnet ist.

7. Dekorationsartikel (100, 200) nach einem der Ansprüche 1 bis 6, wobei der Dekorationsartikel (100, 200) einen Hauptabschnitt (180) und einander gegenüberliegende Ausrichtungslaschen (132, 134) angrenzend an den Hauptabschnitt umfasst, wobei die Ausrichtungslaschen (132, 134) entlang jeweiliger Schwächungslinien (142, 144) abtrennbar sind.

8. Dekorationsartikel (100, 200) nach einem der Ansprüche 1 bis 7, wobei der Dekorationsartikel (100, 200) zum Anhaften auf einer lackierten Oberfläche einer Kraftfahrzeugkarosserie ausgelegt ist.

9. Dekorationsartikel (100, 200) nach einem der Ansprüche 1 bis 8, wobei die Hauptoberfläche der halbsteifen Lage (124, 224) eine maximale langwellige Glätte von bis zu 20 aufweist.

10. Dekorationsartikel (100, 200) nach einem der Ansprüche 1 bis 9, wobei das erste Element (110) und das zweite Element (120) biaxial koextensiv sind.

11. Kombination des Dekorationsartikels (100, 200) nach einem der Ansprüche 1 bis 10 mit einem Substrat (280), das eine Substratoberfläche aufweist, wobei die Substratoberfläche unerwünschte Oberflächendefekte aufweist, wobei die zweite Haftkleberschicht (127) an der Substratoberfläche angehaftet wird und die halbsteife Lage (124, 224) dick genug und steif genug ist, um zu verhindern, dass die unerwünschten Oberflächendefekte wesentlich zur Außenoberfläche des ersten Elements (110) durchtreten.

12. Kombination nach Anspruch 11, wobei die halbsteife Lage (124, 224) eine polymere Lage mit einer Dicke im Bereich von 50 Mikrometern bis zu und einschließlich 2000 Mikrometern ist.

13. Kombination nach Anspruch 11 oder 12, wobei das Substrat ein Teil einer Fahrzeugkarosserie ist.

14. Verfahren, umfassend das Anbringen des Dekorationsartikels (100, 200) nach einem der Ansprüche 1 bis 10, um unerwünschte Oberflächendefekte an einer Oberfläche eines Substrats (280) zu bedecken, ohne dass die Oberflächendefekte wesentlich zur Außenoberfläche des ersten Elements (110) durchtreten.

15. Verfahren nach Anspruch 14, wobei das Substrat (280) mindestens einen Abschnitt einer Fahrzeugkarosserie umfasst.

## Revendications

1. Article décoratif (100, 200) avec un premier élément (110) ayant une surface externe (150) et un bord périphérique (152), dans lequel
ledit premier élément (110) comprend un film couleur opaque (117) épousant la forme, soutenu par une première couche d'adhésif sensible à la pression (115) ; et où l'article décoratif (100, 200) comprend en outre
un deuxième élément (120) comprenant une feuille semi-rigide (124, 224) soutenue par une deuxième couche d'adhésif sensible à la pression (127), ladite feuille semi-rigide (124, 224) ayant un premier bord opposé à un deuxième bord et une surface principale venant en contact avec ladite première couche d'adhésif sensible à la pression (115),
dans lequel ledit premier élément (110) s'étend au-delà dudit premier bord et dudit deuxième bord, et au moins l'un desdits premier bord et deuxième bord de ladite feuille semi-rigide (124, 224) est un bord arrondi.

2. Article décoratif (100, 200) selon la revendication 1, dans lequel au moins l'un parmi lesdits premier bord et deuxième bord de ladite feuille semi-rigide (124, 224) est arrondi de façon à amener un changement relativement progressif dans la pente dudit premier élément (110) à mesure qu'il s'étend au-delà de ladite feuille semi-rigide (124, 224).

3. Article décoratif (100, 200) selon la revendication 1 ou 2, dans lequel au moins l'un parmi lesdits premier bord et deuxième bord de ladite feuille semi-rigide (124, 224) est un bord arrondi avec un rayon de courbure égal à au moins la moitié de l'épaisseur de ladite feuille semi-rigide (124, 224).

4. Article décoratif (100, 200) selon l'une quelconque des revendications 1 à 3, dans lequel ledit premier bord et ledit deuxième bord sont chacun un bord arrondi.

5. Article décoratif (100, 200) selon l'une quelconque des revendications 1 à 4, dans lequel ledit deuxième élément (120) a un troisième bord opposé à un quatrième bord, et dans lequel ledit troisième bord et ledit quatrième bord sont superposés sur ledit bord périphérique.

6. Article décoratif (100, 200) selon l'une quelconque des revendications 1 à 5, dans lequel ledit deuxième élément (120) est disposé au sein dudit bord périphérique (152).

7. Article décoratif (100, 200) selon l'une quelconque des revendications 1 à 6, où ledit article décoratif (100, 200) comprend une partie principale (180) et des languettes d'alignement opposées (132, 134) adjacentes à ladite partie principale, dans lequel lesdites languettes d'alignement (132, 134) sont détachables le long de lignes d'affaiblissement respectives (142, 144).

8. Article décoratif (100, 200) selon l'une quelconque des revendications 1 à 7, où ledit article décoratif (100, 200) est conçu pour être fixé par adhérence sur une surface peinte d'une carrosserie de véhicule à moteur.

9. Article décoratif (100, 200) selon l'une quelconque des revendications 1 à 8, dans lequel la surface principale de ladite feuille semi-rigide (124, 224) a une régularité maximale d'ondulation longue allant jusqu'à 20.

10. Article décoratif (100, 200) selon l'une quelconque des revendications 1 à 9, dans lequel ledit premier élément (110) et ledit deuxième élément (120) sont biaxialement coextensifs.

11. Combinaison de l'article décoratif (100, 200) selon l'une quelconque des revendications 1 à 10 avec un substrat (280) ayant une surface de substrat, dans laquelle ladite surface de substrat a des défauts de surface indésirables, ladite deuxième couche d'adhésif sensible à la pression (127) est fixée par adhérence sur ladite surface de substrat, et ladite feuille semi-rigide (124, 224) est suffisamment épaisse et suffisamment rigide pour empêcher lesdits défauts de surface indésirables de transparaître sensiblement sur la surface externe dudit premier élément (110).

12. Combinaison selon la revendication 11, dans laquelle ladite feuille semi-rigide (124, 224) est une feuille polymère ayant une épaisseur dans la plage allant de 50 micromètres jusqu'à et y compris 2000 micromètres.

13. Combinaison selon la revendication 11 ou 12, dans laquelle ledit substrat est une partie d'une carrosserie de véhicule.

14. Procédé comprenant l'application de l'article décoratif (100, 200) selon l'une quelconque des revendications 1 à 10 de façon à couvrir des défauts de surface indésirables sur une surface d'un substrat (280) sans que les défauts de surface transparaissent sensiblement sur la surface externe du premier élément (110).

15. Procédé selon la revendication 14, dans lequel le substrat (280) comprend au moins une partie d'une carrosserie de véhicule.
